# EUROPEAN PATENT APPLICATION

(11) **EP 4 617 480 A1**
(43) Date of publication of application: **17.09.2025**
(21) Application number: 25162103.3
(22) Date of filing: 06.03.2025
(51) Int. Cl.: F02B 61/04, F01D 25/04

(54) **ENGINE**

(30) Priority: 13.03.2024 JP 2024038846
(71) Applicant: Yanmar Holdings Co., Ltd., Osaka-shi, Osaka (JP)
(72) Inventor: OKAGAWA, Masaaki, Osaka-shi (JP); TANAKA, Hiroki, Osaka-shi (JP); HIRAI, Kazuki, Osaka-shi (JP)
(74) Representative: Sekiguchi, Kazuya

(57) **Abstract**

[Problem] A technique capable of appropriately suppressing vibration of the turbocharger included in the engine is provided.

[Solution] An exemplary engine includes an engine body and a turbocharger. The engine body includes a supporting portion that supports the turbocharger. The supporting portion includes a dynamic vibration absorber. The dynamic vibration absorber is connected to the turbocharger via a connecting portion.

## Description

### TECHNICAL FIELD

The present invention relates to an engine.

### BACKGROUND ART

Conventionally, it is known that a vibration isolator is disposed between an engine and an installation object when the engine is installed on the installation object. For example, Patent Document 1 discloses a vibration isolator device provided between an engine and a hull in order to make it difficult for vibration to be transmitted between the engine and the hull.

### PRIOR ART DOCUMENT

### PATENT DOCUMENT

Patent Document 1: JP 2019-183854 A

### SUMMARY OF INVENTION

### TECHNICAL PROBLEM

When the vibration isolator is disposed between the engine and the installation object, vibrations of the engine can be suppressed from being transmitted to the installation object. However, when the vibration isolator is disposed between the engine and the installation object, unlike the case where the engine is fixed so that the engine does not move with regard to the installation object, the engine itself can vibrate freely. When the engine itself can vibrate freely in this way, vibration of a turbocharger attached to an engine body becomes large, and the vibration level may become a problem.

It is an object of the present invention to provide a technique capable of appropriately suppressing vibration of the turbocharger included in the engine.

### SOLUTION TO PROBLEM

An exemplary engine of the present invention includes an engine body and a turbocharger. The engine body includes a supporting portion that supports the turbocharger. The supporting portion includes a dynamic vibration absorber. The dynamic vibration absorber is connected to the turbocharger via a connecting portion.

### ADVANTAGEOUS EFFECTS OF INVENTION

According to the exemplary present invention, it is possible to appropriately suppress vibration of the turbocharger included in the engine.

### BRIEF DESCRIPTION OF DRAWINGS

Fig. 1 is a front view illustrating a schematic configuration of an engine.
Fig. 2 is a front view of the engine schematically illustrating a relationship between an engine body and a turbocharger.
Fig. 3 is a front view schematically illustrating a configuration of the engine equipped with a dynamic vibration absorber.
Fig. 4 is an enlarged schematic perspective view illustrating a portion in the engine where the dynamic vibration absorber is disposed.
Fig. 5 is a perspective view illustrating a schematic configuration of a first dynamic vibration absorber.
Fig. 6A is a perspective view illustrating a schematic configuration of a first portion of the first dynamic vibration absorber.
Fig. 6B is a perspective view illustrating a schematic configuration of a second portion of the first dynamic vibration absorber.
Fig. 7 is a front view illustrating a schematic configuration of the first dynamic vibration absorber according to a modified example.

### DESCRIPTION OF EMBODIMENTS

An exemplary embodiment of the present invention will be explained with reference to the drawings. Note that, in the drawings, the same or corresponding parts are denoted by the same reference numerals, and explanation thereof will not be repeated unless otherwise required.

### 1. Overview of Engine

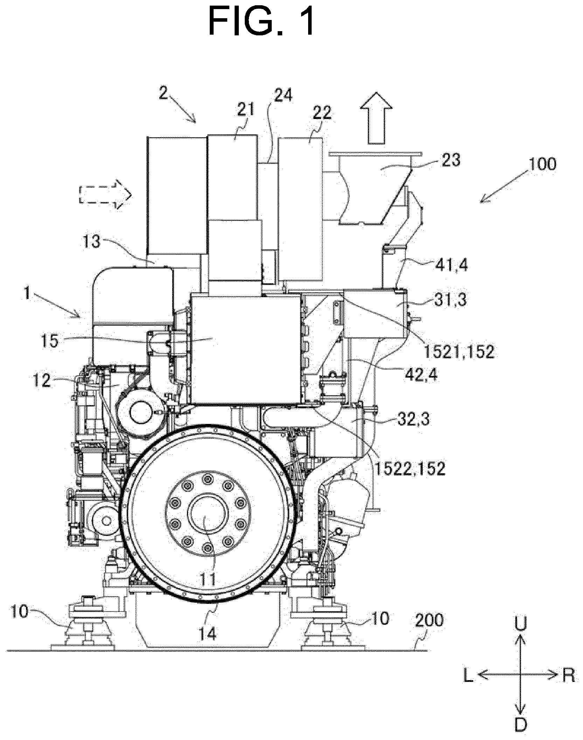

Fig. 1 is a front view illustrating a schematic configuration of an engine 100 according to an embodiment of the present invention. An outline of the engine 100 will be described with reference to Fig. 1.

In the description of the engine 100, the directions in this specification are defined as follows. The direction orthogonal to a placement surface 200 on which the engine 100 is mounted is defined as an up-down direction, and the engine 100 is located on the upper side of the placement surface 200. The direction in which the axis of a crankshaft 11 of the engine 100 placed on the placement surface 200 extends is defined as a front-rear direction. In Fig. 1, a front-rear direction is a direction orthogonal to a paper surface, a front side of the paper surface is a front side, and a rear side of the paper surface is a rear side. The direction orthogonal to the up-down direction and the front-rear direction is the left-right direction. When the engine 100 is viewed from the front (front side), the side that is on the right is the right side, and the side that is on the left is the left side. However, the directions described above are designations used merely for explanation, and are not intended to limit the actual positional relationships and directions.

In the drawings, "F" represents the front side, "B" the rear side, "L" the left side, "R" the right side, "U" the upper side, and "D" the lower side.

The engine 100 according to the present embodiment is, as an example, a marine engine used for propulsion of a ship. However, the engine 100 is not limited to the marine engine, and may be another engine, such as an engine used for power generation. The engine 100 is, for example, a diesel engine.

The engine 100 is placed on the placement surface 200, such as a floor surface, provided in the hull. In detail, the engine 100 is placed on the placement surface 200 via a vibration isolator 10. Therefore, vibration is less likely to be transmitted between the engine 100 and the hull. However, in the configuration according to the present embodiment, the engine 100 can vibrate on the vibration isolator 10.

As illustrated in Fig. 1, the engine 100 includes an engine body 1 and a turbocharger 2. The engine body 1 includes, for example, a crankshaft 11, a cylinder block 12, and a cylinder head 13.

The cylinder block 12 accommodates most of the crankshaft 11 extending in the front-rear direction. A plurality of cylinders (not illustrated) aligned at intervals in the front-rear direction are formed in the cylinder block 12. Each of the cylinders extends in the up-down direction. Each of the cylinders accommodates a piston (not illustrated) connected to the crankshaft 11 via a connecting rod. Inside the cylinder, the piston can move in the up-down direction. The crankshaft 11 rotates around the axis extending in the front-rear direction as the piston reciprocates in each cylinder.

A flywheel 14 is mounted to the front end of the crankshaft 11. The flywheel 14 rotates integrally with the crankshaft 11, and is used to take out power from the engine 100.

The cylinder head 13 is mounted on the upper side of the cylinder block 12. Combining the cylinder head 13 and the cylinder block 12 forms a combustion chamber for each cylinder. Intake gas (typically, air) is supplied to each combustion chamber by using an intake system included in the engine 100. After the supplied intake gas is compressed, fuel is injected into each combustion chamber using a fuel supply system included in the engine 100. As a result, combustion occurs in the combustion chamber, and the piston can be reciprocated up and down. Exhaust gas generated in each combustion chamber is exhausted to outside of the combustion chamber using an exhaust system included in the engine 100.

The turbocharger 2 is disposed at a front upper portion of the engine 100. The turbocharger 2 is supported by the engine body 1. Details of the support structure of the turbocharger 2 by the engine body 1 will be described below. The turbocharger 2 is a so-called turbocharger that uses exhaust gas from the engine body 1 as a driving source.

The turbocharger 2 includes a compressor 21. The compressor 21 draws in gas such as air from outside the engine 100 (see a broken white arrow in Fig. 1) and then pressurizes and compresses the intake gas. The compressor 21 supplies the pressurized and compressed intake gas to each combustion chamber via, for example, an intercooler 15.

The turbocharger 2 includes an exhaust turbine 22 and an exhaust turbine downstream passage 23. The exhaust turbine 22 is connected to an exhaust passage (not illustrated; a specific example is an exhaust pipe) provided in the engine body 1. The exhaust turbine downstream passage 23 is connected to an exhaust outlet of the exhaust turbine 22. The exhaust turbine downstream passage 23 is an exhaust pipe made of, for example, aluminum or aluminum alloy. The exhaust outlet of the exhaust turbine 22 is formed by an opening provided on the right side of the exhaust turbine 22.

The exhaust turbine 22 is supplied with exhaust gas exhausted from each combustion chamber. The exhaust turbine 22 rotates a turbine shaft (not illustrated) using the supplied exhaust gas. The exhaust turbine 22 transmits a rotational power generated by a rotation of the turbine shaft to the compressor 21. The compressor 21 is driven by the rotational power transmitted from the exhaust turbine 22. The exhaust turbine 22 exhausts the used exhaust gas to the outside of the turbocharger 2 via the exhaust turbine downstream passage 23 (see a solid white arrow in Fig. 1).

The intercooler 15 is provided on the front side of the engine body 1 and is provided below the turbocharger 2. **In** detail, the intercooler 15 is rigidly fixed to the cylinder block 12 by a plurality of bosses provided in an intercooler housing (not illustrated) constituting the intercooler 15. The intercooler 15 cools intake gas supplied from the turbocharger 2. The intake gas supplied from the compressor 21 of the turbocharger 2 is pressurized and compressed, thereby generating a compression heat that increases in temperature. The intercooler 15 cools the intake gas by exchanging heat between cooling water supplied by pumping and the pressurized and compressed intake gas. That is, providing the intercooler 15 allows the temperature of the intake gas, which is supplied to each combustion chamber, to be adjusted to a desired temperature.

### 2. Relationship between engine body and turbocharger

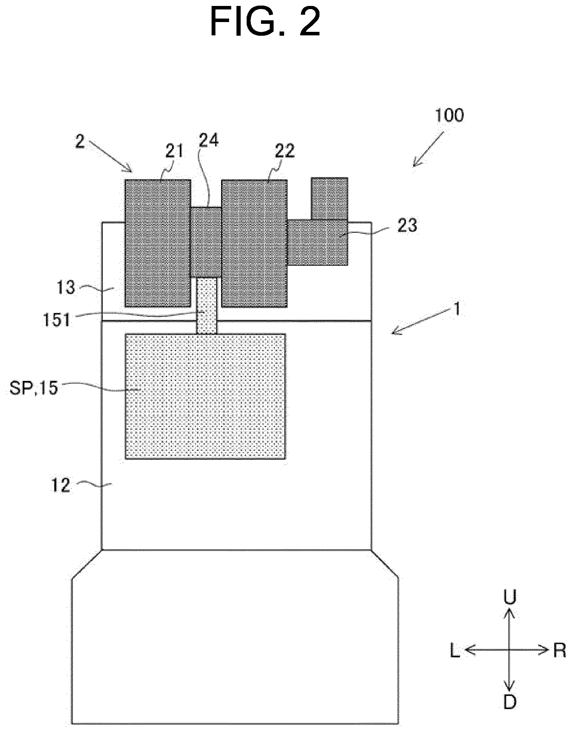

Fig. 2 is a front view of the engine 100 schematically illustrating the relationship between the engine body 1 and the turbocharger 2. The turbocharger 2 according to the present embodiment has a layout in which the inflow direction of the exhaust gas into the exhaust turbine 22 is a radial direction with respect to the turbine shaft (not illustrated) extending in the left-right direction. That is, the turbocharger 2 is a so-called radial turbocharger. The turbocharger 2 configured as a radial turbocharger has a mid-support structure in which a bearing 24 is disposed between the compressor 21 and the exhaust turbine 22 (between the left and right sides).

The engine body 1 includes a supporting portion SP that supports the turbocharger 2. In the present embodiment, the supporting portion SP is the intercooler 15 described above. The intercooler 15 is fixed to the cylinder block 12 as described above. Therefore, it can be said that the turbocharger 2 is supported by the supporting portion SP provided in the cylinder block 12. Note that the supporting portion SP does not have to be the intercooler 15, and may be formed by another portion or member provided in the cylinder block 12 or the cylinder head 13.

In detail, the turbocharger 2 is fixed to a turbocharger supporting bracket 151 provided in the intercooler 15. The turbocharger supporting bracket 151 extends upward from the frame (not illustrated) that constitutes the intercooler 15. The turbocharger supporting bracket 151 may be a separate member from or the same member as the frame that constitutes the intercooler 15.

As described above, because the turbocharger 2 has a mid-support structure, the turbocharger supporting bracket 151 is connected to the bearing 24 in order to support the bearing 24 between the compressor 21 and the exhaust turbine 22. That is, a portion (main portion) of turbocharger 2 constituted by the compressor 21 and the exhaust turbine 22 is configured to be supported (fixed) at one place of a mid-portion by the turbocharger supporting bracket 151. A main portion of the turbocharger 2 is configured to be supported by a structure such as a seesaw (or a balancing toy).

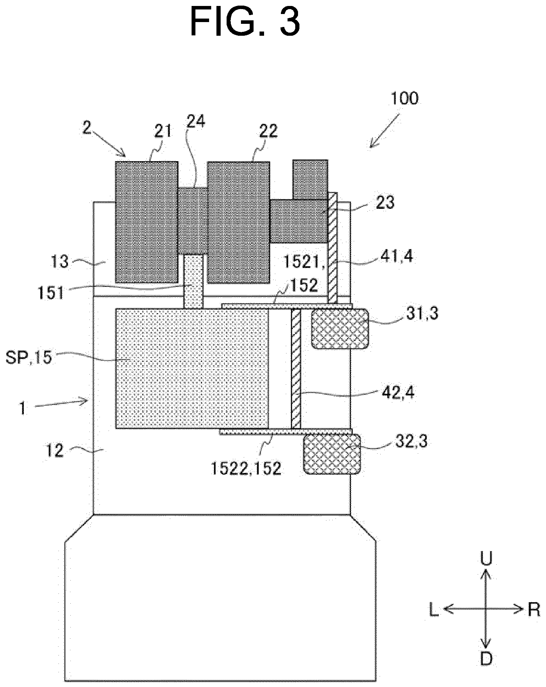

The turbocharger 2, which has a support structure with a seesaw structure as described above, easily vibrates due to the influence of vibration from the engine body 1. A radial turbocharger having a configuration similar to a configuration of the turbocharger 2 according to the present embodiment generally has a heavier rotating portion and a shorter rotating shaft than an axial turbocharger having a layout in which the inflow direction of the exhaust gas is the same as the direction of the turbine shaft, and therefore tends to vibrate more easily. Considering these points, the engine 100 according to the present embodiment is configured to include a dynamic vibration absorber (dynamic damper) 3 (see Fig. 3 described below) in order to suppress vibration of the turbocharger 2.

Fig. 3 is a front view schematically illustrating the configuration of the engine 100 equipped with the dynamic vibration absorber 3. In the present embodiment, the engine 100 includes two dynamic vibration absorbers 3, that is, a first dynamic vibration absorber 31 and a second dynamic vibration absorber 32. In the present embodiment, since it has been found that there are two natural frequencies to be suppressed in the engine 100 when vibration of the turbocharger 2 is suppressed, the number of dynamic vibration absorbers 3 is set to two. However, the number of the dynamic vibration absorbers 3 may be appropriately changed according to the number of natural frequencies suppressed in the engine 100. That is, the number of the dynamic vibration absorbers 3 provided in the engine 100 may be one or more as necessary.

In the present embodiment, the supporting portion SP includes the dynamic vibration absorber 3, and the dynamic vibration absorber 3 is connected to the turbocharger 2 via the connecting portion 4. That is, in the present embodiment, the vibration of the turbocharger 2 is suppressed by using the dynamic vibration absorber 3 provided on the supporting portion SP instead of the turbocharger 2. In this configuration, since the dynamic vibration absorber 3 does not need to be attached directly to the turbocharger 2, the possibility of the dynamic vibration absorber 3 being exposed to the hot air from the turbocharger 2 can be reduced. This can help to suppress deterioration of members (for example, rubber members) that form the dynamic vibration absorber 3. Since vibration of the turbocharger 2 can be suppressed by the dynamic vibration absorber 3 in which deterioration due to hot air is suppressed, the vibration can be appropriately suppressed for a long time by using the dynamic vibration absorber 3.

In the present embodiment, the dynamic vibration absorber 3 is disposed below the turbocharger 2. Much of hot air around the turbocharger 2 tends to flow above the turbocharger 2. For this reason, disposing the dynamic vibration absorber 3 below the turbocharger 2 can reduce the possibility of the dynamic vibration absorber 3 being exposed to hot air. In other words, the deterioration of members constituting the dynamic vibration absorber 3 due to hot air can be suppressed.

In the present embodiment, the supporting portion SP includes a plurality of dynamic vibration absorbers 3. By providing the plurality of dynamic vibration absorbers 3 on the supporting portion SP, it is possible to suppress vibrations derived from a plurality of types of natural frequencies. Since each dynamic vibration absorber 3 is provided on the supporting portion SP, it is possible to suppress deterioration of any of the plurality of dynamic vibration absorbers 3 due to hot air. In addition, since the plurality of dynamic vibration absorbers 3 are all disposed below the turbocharger 2, this also can help to prevent the dynamic vibration absorbers 3 from deteriorating due to hot air.

In detail, the supporting portion SP includes a dynamic vibration absorber attachment 152 to which the dynamic vibration absorber 3 is attached. The connecting portion 4 connecting the turbocharger 2 and the dynamic vibration absorber 3 includes a connecting member 41 connecting the exhaust turbine downstream passage 23 and the dynamic vibration absorber attachment 152. In this configuration, in the left-right direction, the dynamic vibration absorber 3 is disposed on the side of the exhaust turbine 22 (right side), rather than on the side of the compressor 21 (left side) of the turbocharger 2. The turbocharger 2 is configured to be heavier on the side of the exhaust turbine 22 (right side) than on the side of the compressor 21 (left side). For this reason, in the present embodiment, the dynamic vibration absorber 3 is disposed on the heavier side of the turbocharger 2, and the vibration suppression effect of the dynamic vibration absorber 3 can be more effectively demonstrated.

In more detail, the intercooler 15, which is configured as the supporting portion SP, includes a first dynamic vibration absorber attachment 1521 to which the first dynamic vibration absorber 31 is attached and a second dynamic vibration absorber attachment 1522 to which the second dynamic vibration absorber 32 is attached. The first dynamic vibration absorber attachment 1521 includes a plate-like member that extends to the right from a frame member (not illustrated) that constitutes the intercooler 15. The first dynamic vibration absorber 31 is disposed on the lower surface of the right end of the first dynamic vibration absorber attachment 1521. The second dynamic vibration absorber attachment 1522 is located lower than the first dynamic vibration absorber attachment 1521, and includes a plate-like member that extends to the right from a frame member (not illustrated) that constitutes the intercooler 15. The second dynamic vibration absorber 32 is disposed on the lower surface of the right end of the second dynamic vibration absorber attachment 1522.

The connecting portion 4 includes a first connecting member 41 that connects the exhaust turbine downstream passage 23 and the first dynamic vibration absorber attachment 1521, and a second connecting member 42 that connects the first dynamic vibration absorber attachment 1521 and the second dynamic vibration absorber attachment 1522. The first connecting member 41 is set up on the upper surface of the plate-shaped first dynamic vibration absorber attachment 1521, and an upper end of the first connecting member 41 is fixed to the right end of the exhaust turbine downstream passage 23. The second connecting member 42 is set up on the upper surface of the plate-shaped second dynamic vibration absorber attachment 1522, and an upper end of the second connecting member 42 is fixed to the lower surface of the first dynamic vibration absorber attachment 1521. The fixing of the connecting members 41 and 42 to each portion may be carried out using fasteners such as screws.

The first dynamic vibration absorber 31 is connected to the exhaust turbine downstream passage 23 via the first dynamic vibration absorber attachment 1521 and the first connecting member 41. The second dynamic vibration absorber 32 is connected to the exhaust turbine downstream passage 23 via the second dynamic vibration absorber attachment 1522, the second connecting member 42, the first dynamic vibration absorber attachment 1521 and the first connecting member 41.

In the present embodiment, as illustrated in Fig. 3, the plurality of dynamic vibration absorbers 3 are disposed at different heights in an up-down direction. The plurality of dynamic vibration absorbers 3 are arranged in the up-down direction in a front view. In this configuration, it is possible to suppress the width (length in the left-right direction) of the engine 100 from becoming larger than when the plurality of dynamic vibration absorbers 3 are arranged in the left-right direction. In this configuration, it is possible to suppress the depth (length in the front-rear direction) of the engine 100 from becoming larger than when the plurality of dynamic vibration absorbers 3 are arranged in the front-rear direction. However, the present invention does not exclude a configuration in which the plurality of dynamic vibration absorbers 3 are arranged in the right-left direction or the front-rear direction, and such a configuration may be adopted.

### 3. Structure of dynamic vibration absorber

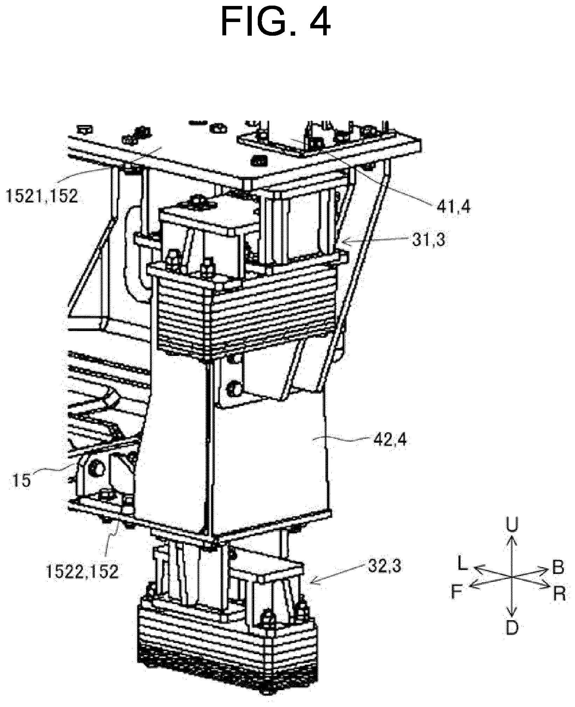

Next, the structure of the dynamic vibration absorber 3 included in the engine 100 will be described. Fig. 4 is an enlarged schematic perspective view illustrating the portion in the engine 100 where the dynamic vibration absorber 3 is disposed. In Fig. 1, a cover member is attached to the dynamic vibration absorber 3 so that the inside of the dynamic vibration absorber 3 cannot be seen, but in Fig. 4, the dynamic vibration absorber 3 from which the cover member is removed is illustrated.

As illustrated in Fig. 4, the first dynamic vibration absorber 31 attached to the first dynamic vibration absorber attachment 1521 and the second dynamic vibration absorber 32 attached to the second dynamic vibration absorber attachment 1522 are disposed in different directions, but their basic structures are the same. Therefore, the structure of the dynamic vibration absorber 3 will be described below using the structure of the first dynamic vibration absorber 31 as an example, and a detailed description of the structure of the second dynamic vibration absorber 32 will be omitted.

In the present embodiment, the direction of the first dynamic vibration absorber 31 and the direction of the second dynamic vibration absorber 32 differ from each other by 90° in a plan view. However, the direction of the first dynamic vibration absorber 31 and the direction of the second dynamic vibration absorber 32 may be the same, or their directions may be configured at angles different from the angle in the present embodiment.

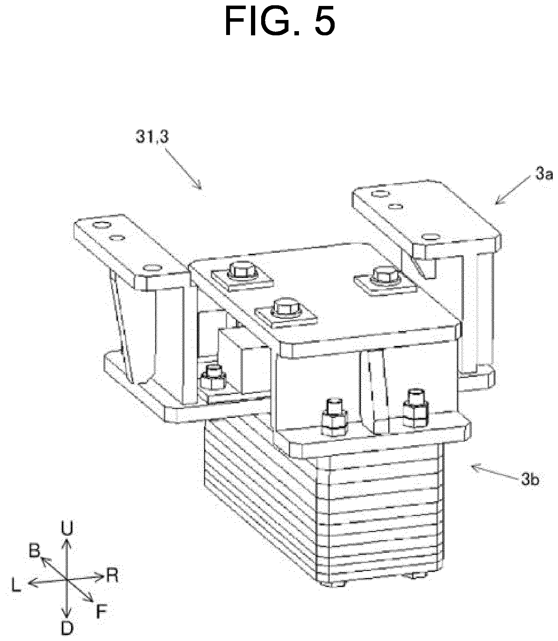

Fig. 5 is a perspective view illustrating a schematic configuration of a first dynamic vibration absorber 31. Note that a viewing direction in Fig. 5 is intentionally changed from the direction in Fig. 4 in order to make it easier to understand the configuration of the first dynamic vibration absorber 31. Fig. 4 is a diagram as viewed from a diagonally upper right direction, and Fig. 5 is a diagram as viewed from a diagonally upper left direction. As illustrated in Fig. 5, the first dynamic vibration absorber 31 (dynamic vibration absorber 3) includes a first portion 3a and a second portion 3b. The first portion 3a and the second portion 3b are provided so as to be dividable.

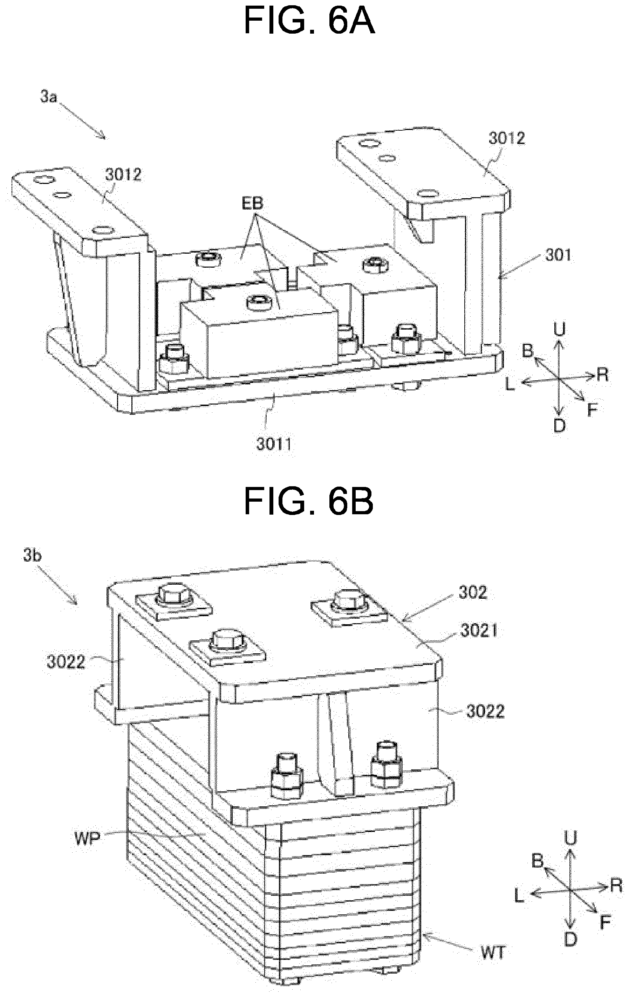

Fig. 6A is a perspective view illustrating a schematic configuration of the first portion 3a of the first dynamic vibration absorber 31. Fig. 6B is a perspective view illustrating a schematic configuration of the second portion 3b of the first dynamic vibration absorber 31. Figs 6A and 6B illustrate the first dynamic vibration absorber 31 illustrated in Fig. 5 divided into the first portion 3a and the second portion 3b.

As illustrated in Figs. 6A and 4, the first portion 3a (in other words, the dynamic vibration absorber 3) includes a first dynamic vibration absorber frame 301, which is suspended from a dynamic vibration absorber attachment 152 (specifically, the first dynamic vibration absorber attachment 1521) provided in the supporting portion SP and on which an elastic body EB is placed. The first dynamic vibration absorber frame 301 is U-shaped in a front view.

In detail, the first dynamic vibration absorber frame 301 includes an elastic body placement part 3011 in the form of a rectangular plate that extends in the left-right direction. The elastic body EB is placed on the upper surface of the elastic body placement part 3011 in a fixed state using a fastener such as a screw. In the present embodiment, a plurality of (specifically, three) elastic bodies EB are placed on the elastic body placement part 3011, but this is just an example. The elastic body placement part 3011 may be configured to have only one elastic body EB placed, or may be configured to have a plurality of elastic bodies EB placed, other than three. A detailed example of the elastic body EB is a rubber member.

The first dynamic vibration absorber frame 301 includes a pair of mounting walls 3012 that are set up at both ends of the left-right direction (longitudinal direction) of the elastic body placement part 3011. Each of the pair of mounting walls 3012 is fixed to the lower surface of the first dynamic vibration absorber attachment 1521 using a fastener such as a screw, with the upper surface of the pair of mounting walls 3012 facing the lower surface of the first dynamic vibration absorber attachment 1521. The fixing of the pair of mounting walls 3012 to the first dynamic vibration absorber attachment 1521 is performed with the first portion 3a and the second portion 3b combined (as illustrated in Fig. 5).

As illustrated in Figs 6B and 4, the second portion 3b (in other words, the dynamic vibration absorber 3) is supported by the first dynamic vibration absorber frame 301 via the elastic body EB, and includes a second dynamic vibration absorber frame 302 that suspends a weight WT. The second dynamic vibration absorber frame 302 is inverted-U-shaped in a side view. In other words, the second dynamic vibration absorber frame 302 is inverted with respect to the first dynamic vibration absorber frame 301 in the up-down direction, and the directions of the U-shape are different by 90°.

In detail, the second dynamic vibration absorber frame 302 includes a rectangular plate-shaped mounting plate 3021 that extends in the front-rear direction. The mounting plate 3021 is placed on the elastic body EB, with the lower surface of the mounting plate 3021 facing the upper surface of the elastic body EB placed on the elastic body placement part 3011. The mounting plate 3021 is fixed to the elastic body EB using fasteners such as screws, with the mounting plate 3021 placed on the elastic body EB. In the present embodiment, since there are a plurality of elastic bodies placed on the elastic body placement part 3011, the mounting plate 3021 is fixed to each of the elastic bodies EB.

The second dynamic vibration absorber frame 302 is provided with a pair of weight supporting portions 3022 extending downward from both ends of the mounting plate 3021 in the front-rear direction (longitudinal direction). The weight supporting portion 3022 on the front side of the pair of weight supporting portions 3022 supports a front end of the weight WT having a rectangular plate shape extending in the front-rear direction. The weight supporting portion 3022 on the rear side of the pair of weight supporting portions 3022 supports a rear end of the weight WT having a rectangular plate shape extending in the front-rear direction. In detail, the front end and rear end of the weight WT are fixed to the pair of weight supporting portions 3022 by screwing, and therefore, the weight WT is suspended from the pair of weight supporting portions 3022.

In the present embodiment, the weight WT is configured to have a plurality of weight pieces WP stacked in the up-down direction, but this is just an example. The weight WT may be composed of a single mass. When the weight WT is composed of weight pieces WP, the weight WT may be composed of only one weight piece WP. In the present embodiment, the plurality of weight pieces WP stacked in the up-down direction are collectively fixed to the pair of weight supporting portions 3022 by screwing.

In this way, by dividing the structure into a first portion 3a having a first dynamic vibration absorber frame 301 and a second portion 3b having a second dynamic vibration absorber frame 302, it is possible to easily adjust weight of the weight WT using the second dynamic vibration absorber frame 302. Further, when the elastic body EB is replaced, the elastic body EB can be easily replaced by removing only the second portion 3b.

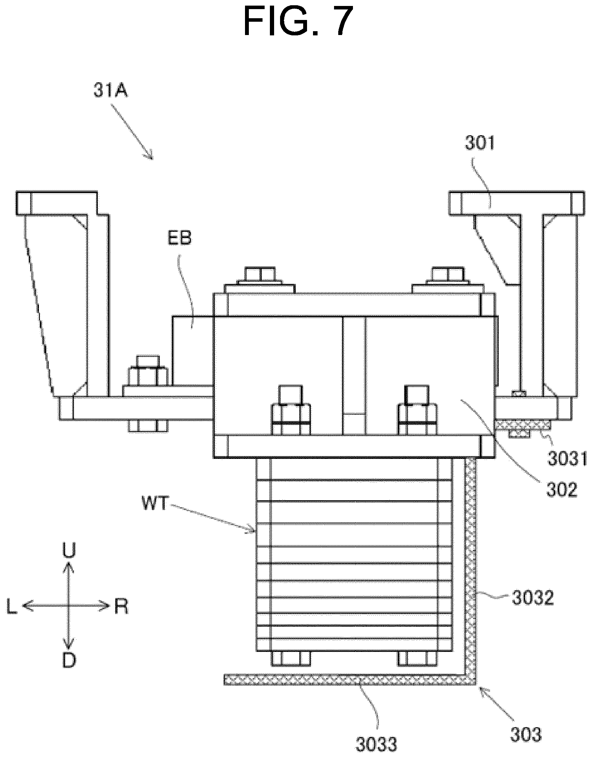

Fig. 7 is a front view illustrating a schematic configuration of a first dynamic vibration absorber 31A according to a modified example. The configuration according to the modified example can also be applied to the second dynamic vibration absorber 32 according to the above-described embodiment. The first dynamic vibration absorber 31A according to the modified example is generally the same as the configuration of the first dynamic vibration absorber 31 according to the above-mentioned embodiment, but differs in that a third dynamic vibration absorber frame 303 is added.

The third dynamic vibration absorber frame 303 is S-shaped in a front view. In detail, the third dynamic vibration absorber frame 303 includes a first flat plate 3031, a flat plate connecting portion 3032, and a second flat plate 3033.

The first flat plate 3031 is a rectangular plate that extends in the front-rear direction. The first flat plate 3031 is fixed to the elastic body placement part 3011 with fasteners such as screws, with the upper surface of the first flat plate 3031 facing the bottom surface of the elastic body placement part 3011. In other words, the third dynamic vibration absorber frame 303 is suspended from the first dynamic vibration absorber frame 301.

The flat plate connecting portion 3032 connects the first flat plate 3031 and the second flat plate 3033. The flat plate connecting portion 3032 is rectangular plate-shaped and extends downward from the lower end of the first flat plate 3031. The flat plate connecting portion 3032 extends downward to a position below the lower end of the weight WT suspended by the second dynamic vibration absorber frame 302.

The second flat plate 3033 extends to the left from the lower end of the flat plate connecting portion 3032. The second flat plate 3033 has the form of a rectangular plate that extends in a direction parallel to the left-right and front-rear directions. The second flat plate 3033 overlaps the weight WT in a plan view and has an area equal to or larger than the area of the weight WT. A gap is formed between the second flat plate 3033 and the weight WT in the up-down direction. In the present embodiment, the weight WT is screwed to the second dynamic vibration absorber frame 302, and a part of the screw protrudes downward from the weight WT, but a gap is formed between the protruding part of the screw and the second flat plate 3033 in the up-down direction.

When the third dynamic vibration absorber frame 303 is provided as described above, for example, it is possible to easily perform replacement of the elastic body EB. In detail, in order to replace the elastic body EB, the screw-fastened weight WT is removed from the second dynamic vibration absorber frame 302 before the second dynamic vibration absorber frame 302 is removed from the elastic body EB. The removed weight WT is then placed on the third dynamic vibration absorber frame 303. In this way, it is possible to perform replacement of the elastic body EB without moving the heavy weight WT to another place, and thus a person who performs the replacement can easily perform the replacement.

### 4. Notes and the like

The various technical features disclosed in the present specification can be modified in various ways without departing from the gist of the technical creation thereof. In addition, the plurality of embodiments, examples, and modifications described in the present specification may be combined to the extent possible.

### 5. Appendix

The exemplary engine according to the present invention may be an engine that includes an engine body and a turbocharger, wherein the engine body has a supporting portion that supports the turbocharger, the supporting portion has a dynamic vibration absorber, and the dynamic vibration absorber is connected to the turbocharger via a connecting portion (first configuration).

In the engine according to the first configuration described above, the dynamic vibration absorber may be located below the turbocharger (second configuration).

In the engine according to the first or second configuration described above, the turbocharger may include an exhaust turbine connected to an exhaust passage provided in the engine body, and an exhaust turbine downstream passage connected to an exhaust outlet of the exhaust turbine, wherein the supporting portion includes a dynamic vibration absorber attachment for attaching the dynamic vibration absorber, and the connecting portion includes a connecting member connecting the exhaust turbine downstream passage and the dynamic vibration absorber attachment (third configuration).

In the engine according to any one of the first to third configurations described above, the supporting portion may include the plurality of dynamic vibration absorbers (fourth configuration).

In the engine according to the fourth configuration described above, the plurality of dynamic vibration absorbers may be disposed at different heights in an up-down direction (fifth configuration).

In the engine according to any one of the first to fifth configurations described above, the dynamic vibration absorber may include a first dynamic vibration absorber frame which is suspended from a dynamic vibration absorber attachment provided in the supporting portion and on which an elastic body is placed, and a second dynamic vibration absorber frame which is supported by the first dynamic vibration absorber frame via the elastic body and from which a weight is suspended (sixth configuration).

### REFERENCE SIGNS LIST

1 engine body
2 turbocharger
3 dynamic vibration absorber
4 connecting portion
15 intercooler
22 exhaust turbine
23 exhaust turbine downstream passage
31, 31A first dynamic vibration absorber
32 second dynamic vibration absorber
100 engine
152 dynamic vibration absorber attachment
301 first dynamic vibration absorber frame
302 second dynamic vibration absorber frame
1521 first dynamic vibration absorber attachment
1522 second dynamic vibration absorber attachment
EB elastic body
SP supporting portion
WT weight

## Claims

1. An engine comprising:
an engine body and
a turbocharger, wherein
the engine body has a supporting portion that supports the turbocharger;
the supporting portion has a dynamic vibration absorber; and
the dynamic vibration absorber is connected to the turbocharger via a connecting portion.

2. The engine according to claim 1, wherein the dynamic vibration absorber is located below the turbocharger.

3. The engine according to claim 1 or 2, wherein
the turbocharger includes an exhaust turbine connected to an exhaust passage provided in the engine body; and
an exhaust turbine downstream passage connected to an exhaust outlet of the exhaust turbine, wherein
the supporting portion includes a dynamic vibration absorber attachment for attaching the dynamic vibration absorber; and
the connecting portion includes a connecting member connecting the exhaust turbine downstream passage and the dynamic vibration absorber attachment.

4. The engine according to claim 1, wherein the supporting portion includes the plurality of dynamic vibration absorbers.

5. The engine according to claim 4, wherein the plurality of dynamic vibration absorbers is disposed at different heights in an up-down direction.

6. The engine according to claim 1, wherein the dynamic vibration absorber includes:
a first dynamic vibration absorber frame which is suspended from a dynamic vibration absorber attachment provided in the supporting portion and on which an elastic body is placed; and
a second dynamic vibration absorber frame which is supported by the first dynamic vibration absorber frame via the elastic body and from which a weight is suspended.
